Europäisches Patentamt

(19) European Patent Office

Office européen des brevets

(11) Publication number: **0 302 004**

**A2**

## (12) EUROPEAN PATENT APPLICATION

(21) Application number: **88810257.1**

(22) Date of filing: **22.04.88**

(51) Int. Cl.⁴: **A 61 C 19/00**

(30) Priority: **27.07.87 CH 2866/87**

(43) Date of publication of application:
**01.02.89 Bulletin 89/05**

(84) Designated Contracting States:
**AT BE DE ES FR GB GR IT LU NL SE**

(71) Applicant: **Hawe-Neos Dental Dr. H. von Weissenfluh S.A. CH-6925 Gentilino (CH)**

(72) Inventor: **von Weissenfluh, Beat Casa Zarament CH-6925 Gentilino (CH)**

(74) Representative: **Baggiolini, Raimondo et al Patent Attorneys Fiammenghi-Fiammenghi-Racheli Via San Gottardo 15 CH-6900 Lugano (CH)**

(54) **Container of abrasive pastes for dental use.**

(57) The container comprises a flexible plate exhibiting a body (1') provided with depressions (2) to contain abrasive pastes of different fineness or quality and at least one strip (1", 1''') to allow wrapping around the dentist's finger, or around his wrist like a bracelet, or fastening to finger or wrist holding element.

The plate of a container can be superposed on that of other containers that are the same to fit in other depressions (2) to occupy minimum space when various plates are stacked.

FIG 1

FIG 6

Bundesdruckerei Berlin

**Description**

## Container of Abrasive pastes for dental use

This invention has as its object a container of abrasive pastes for dental use enabling the dentist to perform his teeth cleaning work with ease and rapidity, even while using the most varied types of abrasive pastes.

A further advantage of this container is in the fact that each of them can easily be stacked with others that are the same, occupying minimum space.

This container is characterized by a flexible plate exhibiting a body provided with depressions to contain abrasive pastes of different fineness or quality and at least one strip to allow wrapping around the dentist's finger, or around his wrist like a bracelet, or fastening to finger or wrist holding elements; the plate of one container being able to be superimposed on that of other containers that are the same to fit in other depressions to occupy minimum space when various plates are stacked.

It does not appear to the applicant that containers of this type now exist.

-- Figure 1 represents a first embodiment of this container.

-- Figures 2, 3, 4, 5, 6, 7 represent the mode of fastening it to the dentist's left thumb while his right hand performs the work of cleaning teeth.

-- Figures 8 and 9 represent a second embodiment of the container as a bracelet.

-- Figures 10 and 11 represent a third embodiment of the container an elastic bracelet that can slipped on the hand or wrist.

-- Figures 12 and 13 represent a fourth embodiment also as a bracelet.

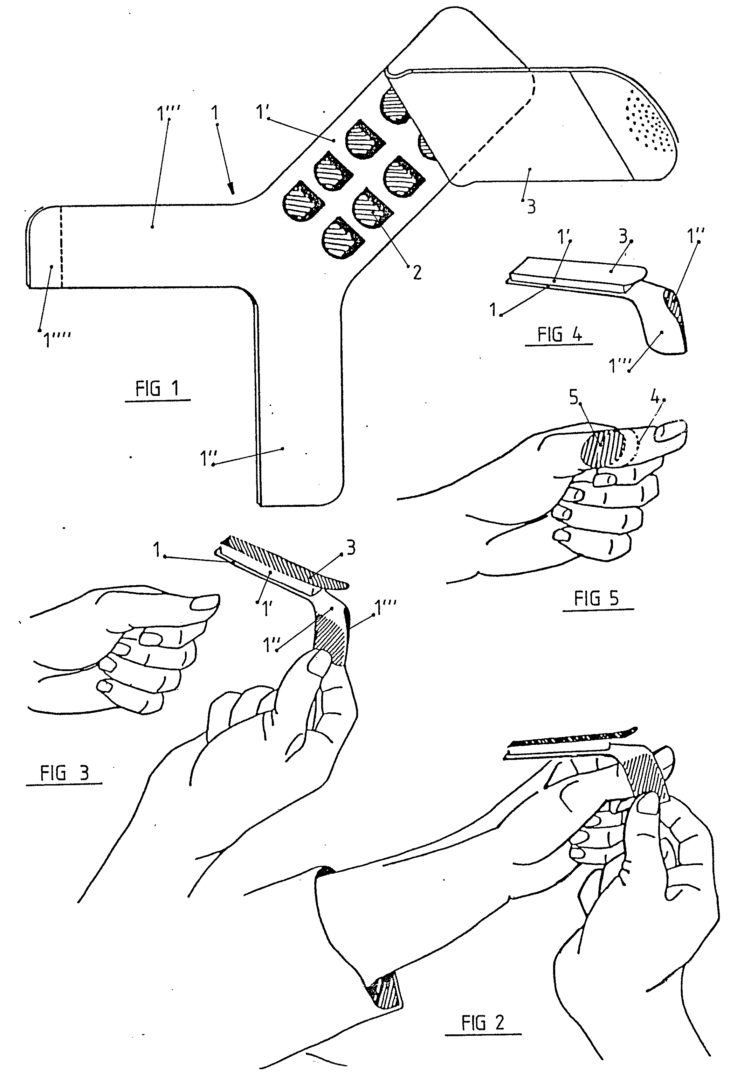

With reference to figures 1 to 7:

The first embodiment consists in a flexible plane plate 1, preferably of thermoplastic material (polystyrene, cellulose acetate and the like) exhibiting a body 1' provided with depressions 2 obtained by stamping, in each of which is inserted a determined quality or type of abrasive paste necessary for the dentist to clean teeth.

The entire unit is protected by a sheet of pressure-sensitive plastic 3 which is removed by tearing off at the time of use.

Plate 1 exhibits two flexible strips 1" and 1‴ ending in an adhesive part 1⁗.

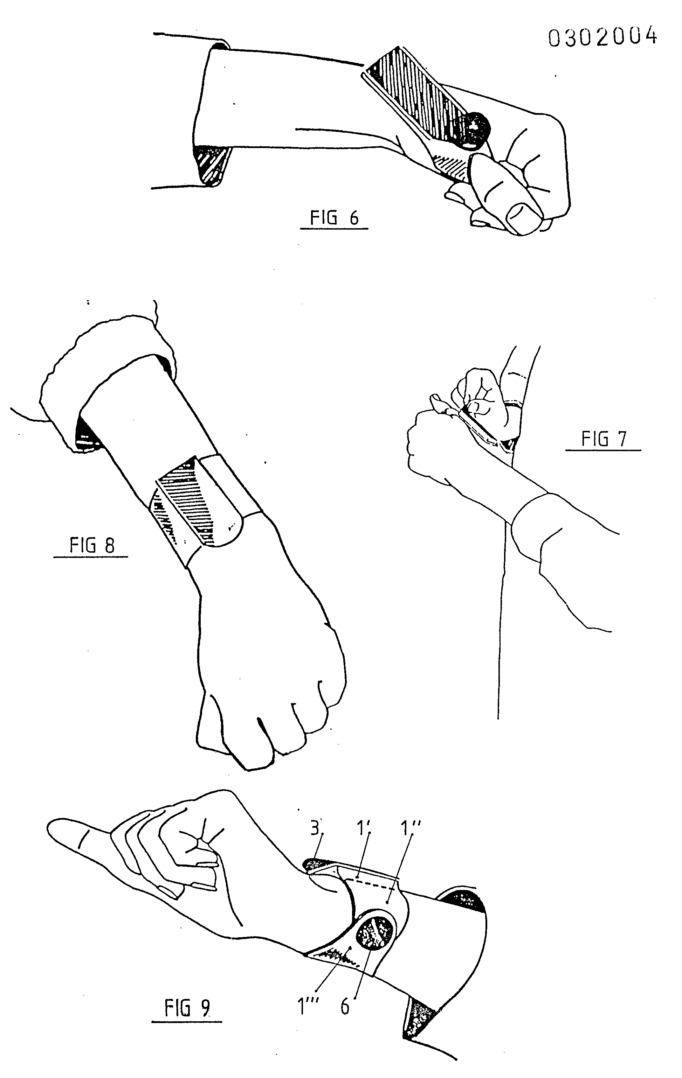

By folding said two strips (fig. 2) on a finger like a ring and joining their ends 1⁗ provided with adhesive (fig. 3) it is possible to slip the ring on the left thumb (fig. 4 and 5), by making a circular movement (4 fig. 5), until the ring fits perfectly on section 5 of the thumb, allowing a perfect fit on said thumb (fig. 6).

With removal of protective film 3 (fig. 1 and 7) the container is ready to use.

Body 1' of the plate can also be distinct, i.e., separate, from plate 1 itself and joined to it by gluing (see fig. 4) or other known means.

Figures 8 and 9 represent a second embodiment of this container having the shape of a bracelet, which can be fastened, for example, by means of a snap 6 or any other known means.

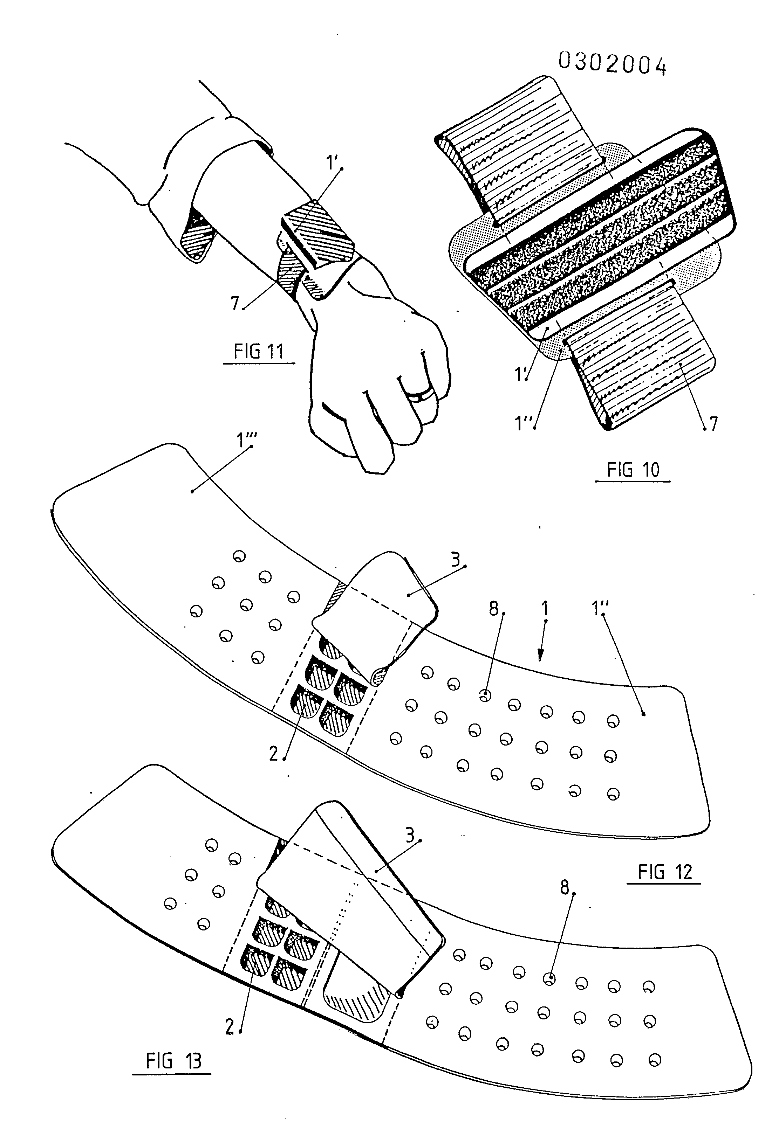

The bracelet according to the third embodiment indicated in figures 10 and 11 provides an elastic band 7 fastened to strip 1" of container 1', which can be slipped on the hand then the wrist.

Figures 12 and 13 represent a fourth embodiment comprising a bracelet formed by an elastic plate 1 provided with depressions 2 containing the abrasive paste and the two strips 1", 1‴ exhibiting a succession of holes 8 which allow fastening of the two ends of the strips, wound around the wrist, with wristband buttons or other known means.

In the embodiment according to figures 1, 12, 13 it is possible to superpose a plurality of plane plates so that the respective depressions coincide, the entire unit occupying minimum space.

Many other embodiments are possible, in line with what has been claimed in claim 1 and all are understood as coming within the scope of protection of the patent.

**Claims**

1. Container of abrasive pastes for dental use, characterized by a flexible plate (1) exhibiting a body (1') provided with depressions (2) to contain abrasive pastes of different fineness or quality and at least one strip (1", 1‴) to allow wrapping around the dentist's finger, or around his wrist like a bracelet, or fastening to finger or wrist holding elements (7, fig. 10); the plate of one container being able to be superimposed on that of other equal containers to fit in other depressions (2) to occupy minimum space when various plates are stacked.

2. Container according to claim 1, wherein said depressions, filled with the respective abrasive pastes, are protected by a pressure-sensitive film (3) removable at the time of use.

3. Container according to claims 1 and 2, wherein said body (1') provided with depressions (2) is obtained by stamping of plate (1) itself.

4. Container according to claims 1 and 2, wherein said body (1') provided with depressions is distinct from the plate, i.e., it is applied to it (fig. 4).

5. Container according to claims 1 to 4, wherein the strips are two (1", 1‴, fig. 1) covered at the end (1⁗, fig. 1) partially by a pressure-sensitive material so that the two strips (fig. 3), joined at their end, can stick together forming a buttonhole (fig. 4) that can be slipped on the finger and fit its size (fig. 5 and 6).

6. Container according to claim 1, wherein strips (1", 1‴, fig. 8 and 9) are two so as to be able to be joined like a bracelet by a snap (6) or other equivalent means.

7. Container according to claim 1, wherein said strip (1", fig. 10 and 11) is joined to an elastic band (7) that slips over the wrist like a bracelet.

8. Container according to claim 1, wherein the strips are two (fig. 12 and 13) provided with holes (8) to allow fastening by wristband buttons or equivalent means to the dentist's wrist like a bracelet.

0302004

FIG 1

FIG 4

FIG 5

FIG 3

FIG 2

0302004

FIG 6

FIG 7

FIG 8

FIG 9

0302004

FIG 11

FIG 10

FIG 12

FIG 13